# EUROPEAN PATENT APPLICATION

(11) **EP 3 291 414 A2**
(43) Date of publication of application: **07.03.2018**
(21) Application number: 17188284.8
(22) Date of filing: 29.08.2017
(51) Int. Cl.: H02K 1/14, H02K 1/24

(54) **SWITCHED RELUCTANCE MOTOR WITH AXIAL LAMINATED CONSTRUCTION**

(30) Priority: 31.08.2016 US 201615252495
(71) Applicant: Hamilton Sundstrand Corporation, Charlotte, NC 28217-4578 (US)
(72) Inventor: GIERAS, Jacek F., Glastonbury, CT 06033 (US)
(74) Representative: Hughes, Andrea Michelle

(57) **Abstract**

A switched reluctance motor includes a stator (130) and a rotor (140) disposed within the stator, wherein at least one of the stator and the rotor is formed from a plurality of laminate sheets (142), wherein each of the laminate sheets extends in an axial direction and the plurality of laminate sheets are disposed in a radial direction.

## Description

### BACKGROUND

The subject matter disclosed herein relates to electric motors, and more particularly, to switched reluctance motors.

Electric motors are utilized in numerous applications, including aircraft. Switched reluctance motors are often utilized due to simplicity of construction. Switched reluctance motors are often formed using a laminate construction. However, switched reluctance motors may require additional mass to provide a desired output.

### BRIEF SUMMARY

According to an embodiment, a switched reluctance motor includes a stator and a rotor disposed within the stator, wherein at least one of the stator and the rotor is formed from a plurality of laminate sheets, wherein each of the laminate sheets extends in an axial direction and the plurality of laminate sheets are disposed in a radial direction.

According to an embodiment, a method for providing a switched reluctance motor includes forming at least one of a rotor and a stator from a plurality of laminate sheets, wherein each of the laminate sheets extends in an axial direction, disposing the plurality of laminate sheets in a radial direction, and disposing the rotor within the stator.

Technical function of the embodiments described above includes that at least one of the stator and the rotor is formed from a plurality of laminate sheets, wherein each of the laminate sheets extends in an axial direction and the plurality of laminate sheets are disposed in a radial direction.

Other aspects, features, and techniques of the embodiments will become more apparent from the following description taken in conjunction with the drawings.

### BRIEF DESCRIPTION OF THE DRAWINGS

The subject matter is particularly pointed out and distinctly claimed in the claims at the conclusion of the specification. The foregoing and other features, and advantages of the embodiments are apparent from the following detailed description taken in conjunction with the accompanying drawings in which like elements are numbered alike in the FIGURES:
FIG. 1 is pictorial view of a switched reluctance motor;
FIG. 2 is a pictorial cross sectional view of a rotor segment for use with the switched reluctance motor of FIG. 1; and
FIG. 3 is a pictorial cross sectional view of a stator segment for use with the switched reluctance motor of FIG. 1.

### DETAILED DESCRIPTION

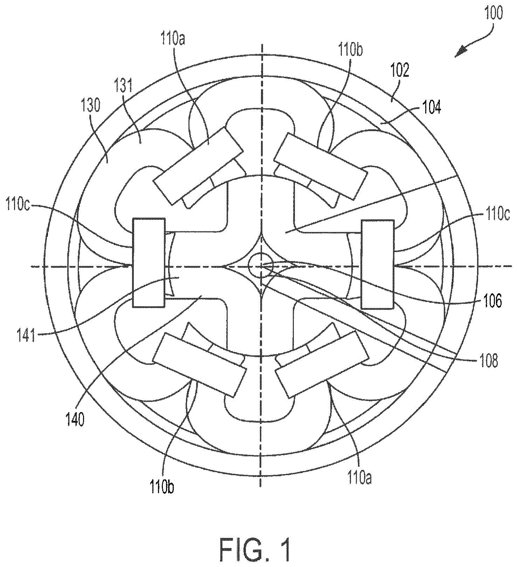

Referring to the drawings, FIG. 1 shows a switched reluctance motor 100. In the illustrated embodiment, the switched reluctance motor 100 includes a stator 130 and a rotor 140 to rotate a shaft 106. The switched reluctance motor 100 can be used in any suitable application, including, but not limited to aviation applications such as fuel pumps, actuators, air conditioning systems, nitrogen production systems, etc. Advantageously, a switched reluctance motor 100 does not require any windings within the rotor 140, simplifying construction of the switched reluctance motor 100.

In the illustrated embodiment, the stator 130 is formed from multiple stator segments 131. As coils 110a-110c of the stator 130 are selectively energized, the rotor 140 and the shaft 106 can be rotated. The stator 130 can be disposed within a stator housing 102. The stator housing 102 can protect the stator 130 from environmental hazards and impacts. In certain embodiments, a stabilizer 104 can be disposed between the stator 130 and the stator housing 102 to prevent excessive movement and vibration of the stator 130 and the stator housing 102. The stabilizer 104 can be formed from any suitable material, including but not limited to elastomeric materials.

In the illustrated embodiment, the rotor 140 is formed from multiple rotor segments 141. The rotor 140 is disposed within the stator 130 with an air gap radially disposed between the rotor 140 and the stator 130. In the illustrated embodiment, the rotor 140 rotates the shaft 106 disposed therein. In the illustrated embodiment, a rotor bushing 108 can be disposed between the rotor 140 and the shaft 106.

During operation, the switched reluctance motor 100 utilizes the magnetic field of the stator 130 and the variable reluctance of the rotor 140 to rotate the shaft 106. Advantageously, the switched reluctance motor 100 can have a simplified construction since power does not have to be delivered to the rotating rotor 140. In the illustrated embodiment, the rotor 140 has Nᵣ poles and the stator 130 has Nₛ poles wherein the number of aligned positions corresponds to the greatest common divisor of Nᵣ and N_{s.}

In the illustrated embodiment, the stator 130 includes a plurality of coils 110a-110c disposed within the stator 130. The coils 110a-110c can be selectively energized in phases utilizing a switching power source. As power is selectively applied to the coils 110a-110c, the magnetic field of the stator 130 and the variable reluctance of the rotor 140 create a force that rotates the rotor 140.

In the illustrated embodiment, stator segments 131 and rotor segments 141 are formed from laminate sheets that are stacked in a radial direction and extend in an axial direction. Advantageously, the stator segments 131 and the rotor segments 141 described herein allow for greater performance of the switched reluctance motor 100 while reducing mass.

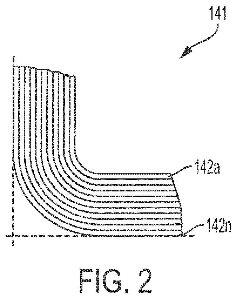

Referring to FIG. 2 a rotor segment 141 is shown. In the illustrated embodiment, the rotor segment 141 is formed from a plurality of rotor laminates 142a-142n.

In the illustrated embodiment, each of the rotor laminates 142a-142n is an axially extending sheet. Therefore, in the illustrated embodiment, each rotor laminate 142a-142n has an axial length that corresponds to the axial length of the assembled rotor segment 141 or rotor 140. In the illustrated embodiment, each rotor laminate 142a-142n is disposed on the outer surface of the preceding rotor laminate 142a-142n, allowing the rotor segment 141 to be formed in a radially outward direction. In certain embodiments, the rotor segment 141 and the rotor laminates 142a-142n can be formed utilizing additive manufacturing methods.

In the illustrated embodiment, the rotor laminates 142a-142n can be formed from any suitable material, including, but not limited to rolled electrical steel. For certain materials such as electrical steel, magnetic flux is aligned with the rolling direction of the electrical steel which corresponds to the axial direction of the rotor laminates 142a-142n. Therefore, in certain embodiments, magnetic flux is maximized in the axial direction of the rotor laminates 142a-142n, allowing for a rotor segment 141 or a rotor 140 formed from the axially extending rotor laminates 142a-142n to have a maximized magnetic flux density. Advantageously, the use of axially extending rotor laminates 142a-142n minimizes core losses and reduces variation of reluctance within the magnetic circuit as current is switched between phases. Further, the use of axially extending rotor laminates 142a-142n allows for greater power density, efficiency and dynamic performance for greater utilization of the magnetic circuit and decreased electromagnetic noise and vibration. Therefore, the use of axially extending rotor laminates 142a-142n allows for switched reluctance motors 100 to be created with a smaller volume envelope, lower inductance and lower costs, allowing for aviation and other suitable applications such as fuel pumps and ball-screw linear actuators.

In the illustrated embodiment, multiple rotor segments 141 can be assembled to form a rotor 140 as shown in FIG. 1. In certain embodiments, the assembled rotor 140 is encapsulated in a resin epoxy. Further, in certain embodiments, the resin epoxy of the assembled rotor 140 can be ground to meet tolerances including the air gap between the rotor 140 and the stator 130.

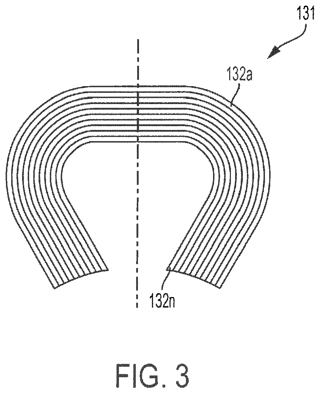

Referring to FIG. 3 a stator segment 131 is shown. In the illustrated embodiment, the stator segment 131 is formed from a plurality of stator laminates 132a-132n.

In the illustrated embodiment, each of the stator laminates 132a-132n is an axially extending sheet. Therefore, in the illustrated embodiment, each stator laminates 132a-132n has an axial length that corresponds to the axial length of the assembled stator segment 131 or stator 130. In the illustrated embodiment, each stator laminate 132a-132n is disposed on the outer surface of the preceding stator laminate 132a-132n, allowing the stator segment 131 to be formed in a radially outward direction. In certain embodiments, the stator segment 131 and the stator laminates 132a-132n can be formed utilizing additive manufacturing methods.

In the illustrated embodiment, the stator laminates 132a-132n can be formed from any suitable material, including, but not limited to rolled electrical steel or any other suitable ferromagnetic steel or alloy. For certain materials such as electrical steel, magnetic flux is aligned with the rolling direction of the electrical steel which corresponds to the axial direction of the stator laminates 132a-132n. Therefore, in certain embodiments, magnetic flux is maximized in the axial direction of the stator laminates 132a-132n, allowing for a stator segment 131 or a stator 130 formed from the axially extending stator laminates 132a-132n to have a maximized magnetic flux density. Advantageously, the use of axially extending stator laminates 132a-132n minimizes core losses and reduces variation of reluctance within the magnetic circuit as current is switched between phases. Further, the use of axially extending stator laminates 132a-132n allows for greater power density, efficiency and dynamic performance for greater utilization of the magnetic circuit and decreased electromagnetic noise and vibration. Therefore, the use of axially extending stator laminates 132a-132n allows for switched reluctance motors 100 to be created with a smaller volume envelope, lower inductance and lower costs, allowing for aviation and other suitable applications such as fuel pumps and ball-screw linear actuators.

In the illustrated embodiment, multiple stator segments 131 can be assembled to form a stator 130 as shown in FIG. 1. Further, in certain embodiments, the coils 110a-110c can be disposed within the stator 130. In certain embodiments, the assembled stator 130 is encapsulated in a resin epoxy. Further, in certain embodiments, the resin epoxy of the assembled stator 130 can be ground to meet tolerances including the air gap between the rotor 140 and the stator 130.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed. Many modifications, variations, alterations, substitutions or equivalent arrangement not hereto described will be apparent to those of ordinary skill in the art without departing from the scope of the invention as defined by the claims. Additionally, while various embodiments have been described, it is to be understood that aspects may include only some of the described embodiments. Accordingly, the embodiments are not to be seen as limited by the foregoing description, but are only limited by the scope of the appended claims.

## Claims

1. A switched reluctance motor, comprising:
a stator (130); and
a rotor (140) disposed within the stator, wherein at least one of the stator and the rotor is formed from a plurality of laminate sheets (142), wherein each of the laminate sheets extends in an axial direction and the plurality of laminate sheets are disposed in a radial direction.

2. The switched reluctance motor of claim 1, further comprising a plurality of coils (110) disposed within the stator, the plurality of coils corresponding to a plurality of phases and being selectively energized.

3. The switched reluctance motor of claim 1 or 2, wherein each of the plurality of laminate sheets is formed from rolled ferromagnetic steel or ferromagnetic alloy.

4. The switched reluctance motor of claim 1, 2 or 3, wherein a magnetic flux is axially aligned with each of the plurality of laminate sheets.

5. The switched reluctance motor of any preceding claim, further comprising a shaft (106) coupled to the rotor.

6. The switched reluctance motor of claim 5, further comprising a rotor bushing disposed between the shaft and the rotor.

7. The switched reluctance motor of any preceding claim, wherein the stator is formed from a plurality of stator segments (131).

8. The switched reluctance motor of any preceding claim, wherein the rotor is formed from a plurality of rotor segments (141).

9. The switched reluctance motor of any preceding claim, wherein the stator is disposed in a stator housing and a stabilizer is disposed between the stator and the stator housing.

10. The switched reluctance motor of any preceding claim, wherein the stator is encapsulated in resin.

11. The switched reluctance motor of any preceding claim, wherein the rotor is encapsulated in resin.

12. A method for providing a switched reluctance motor, the method comprising:
forming at least one of a rotor and a stator from a plurality of laminate sheets, wherein each of the laminate sheets extends in an axial direction;
disposing the plurality of laminate sheets in a radial direction; and
disposing the rotor within the stator.

13. The method of claim 12, further comprising disposing a plurality of coils within the stator.

14. The method of claim 12 or 13, wherein each of the plurality of laminate sheets is formed from rolled steel.

15. The method of claim 12, 13 or 14, wherein a magnetic flux is axially aligned with each of the plurality of laminate sheets.
